# EUROPÄISCHE PATENTSCHRIFT

(11) **EP 2 682 028 B1**
(45) Veröffentlichungstag und Bekanntmachung des Hinweises auf die Patenterteilung: **13.03.2019**
(21) Anmeldenummer: 13175035.8
(22) Anmeldetag: 04.07.2013
(51) Int. Cl.: A47J 31/06

(54) **Einsatz für eine Portionskaffeemaschine**
Insert for a portioning coffee machine
Insert pour une machine à café à dosettes

(30) Priorität: 04.07.2012 DE 102012013204
(43) Veröffentlichungstag der Anmeldung: 08.01.2014
(73) Patentinhaber: Kobler, Piero, 93059 Regensburg (DE)
(72) Erfinder: Kobler, Piero, 93059 Regensburg (DE)
(74) Vertreter: Bittner, Bernhard

(56) Entgegenhaltungen:
- WO-A1-2011/129687
- DE-A1-102010 048 514
- DE-U1-202009 009 125
- DE-U1-202011 004 315

## Beschreibung

Die Erfindung richtet sich auf einen Einsatz für eine Portionskaffeemaschine, umfassend einen verschlossenen oder verschließbaren Behälter zur Aufnahme einer aufzubrühenden Portion des gemahlenen Kaffees.

Portionskaffeemaschinen im Sinne der Erfindung sind seit einigen Jahren gebräuchlich und haben mittlerweile neben den lange bekannten Filterkaffeemaschinen einen nicht unerheblichen Marktanteil. Der Vorteil besteht darin, dass Portionsbehälter, bspw. Kapseln, zumeist aus (Metall-) Folie, oder sogenannten Pads, also Kissen aus Filterpapier oder einem ähnlichen Material, mit jeweils einer Kaffeeportion des aufzubrühenden Kaffees erhältlich sind und bevorratet werden können, so dass zum Gebrauch weder das Mahlen von Kaffee noch das Dosieren desselben erforderlich ist; stattdessen wird einfach eine Kapsel oder ein Pad in die Aufnahme der Portionskaffeemaschine eingelegt. Nachdem diese automatisch geöffnet wurde, strömt Wasser unter Druck durch den Behälter und verlässt diesen nach Aufnahme des Kaffeearomas wieder und fließt sodann direkt in eine Tasse od. dgl. Anschließend wird die verbrauchte Kapsel oder Pad entsorgt.

Da ein Pad bzw. Filterkissen das Kaffeepulver nicht luftdicht abschließt, muss dieses zusätzlich noch luftdicht verpackt werden, was einen zusätzlichen Verpackungsschritt darstellt und damit sehr aufwändig ist.

Kapseln dagegen, deren Körper und Deckel aus Metallfolie bestehen, können das enthaltene Kaffeepulver während der Bevorratungsphase luftdicht verschließen. Tel.: +49 (0)941 630 45 750 Fax: +49 (0)941 630 45 751 mail@schuhbiesser.de www.schuhbiesser.de Andererseits ist bei Kapseln nach dem Gebrauch eine Trennung des verrottbaren Inhalts in Form des Kaffeepulvers von dem nicht verrottbaren Kapselmaterial erforderlich, was in der Praxis nie erfolgt; stattdessen werden die Kapseln im Ganzen weggeworfen. Eine spätere Trennung der verbrauchten Kapseln in das recyclingfähige Aluminium od. dgl. einerseits und den nicht recyclingfähigen Kaffee-Inhalt andererseits wäre technisch äußerst aufwändig und ist damit problematisch und in der Praxis kaum erreichbar. Falls dies nicht erfolgt und das mit hohem Energieeinsatz gewonnene Aluminium nicht recycelt wird, stellen derartige Kapseln eine beträchtliche Belastung für die Umwelt dar.

Aus der WO 2011/129687 A1 ist ein wiederverwendbarer Einsatz für Kaffeepulver bestehend aus einem Behältnis mit einem Dichtungsring im Bereich eines rundumlaufenden, nach außen ragenden Wulstes und einem Deckel mit integriertem Filterelement, durch welchen das Behältnis verschließbar ist, bekannt.

Die Druckschrift DE 20 2009 009125 U1 offenbart eine mit Kaffeepulver befüllbare Kapsel mit becherförmigem Grundkörper und flanschartigem Rand sowie einem Deckelelement zum Verschließen des Grundkörpers, wobei die Kapsel einen Filter sowie ein Dichtungselement aufweist.

Aus der DE 10 2010 048514 A1 ist eine wiederverwendbare Filtervorrichtung für Genussmittel wie beispielsweise Kaffee bekannt, welche aus einem Topf mit Deckel besteht, in den ein Filter eingelegt werden kann.

Derzeit vorhandene Kaffeemaschinen zur Zubereitung von beispielsweise Espresso, usw. beruhen entweder auf dem Prinzip, dass ein Filtersystem komplett in der Kapsel selbst integriert sind, oder sich ein Teil der Kapsel in der Maschine befindet. Problematisch ist hierbei auch, dass sich der druckbeaufschlagte Teil von Kaffeekapseln schlecht abdichten lässt.

Aus den Nachteilen des beschriebenen Standes der Technik resultiert das die Erfindung initiierende Problem, einen gattungsgemäßen Einsatz für eine Portionskaffeemaschine derart weiterzubilden, dass die damit verbundene Umweltbelastung so weit als möglich gesenkt werden kann. Daher besteht die Aufgabe der Erfindung darin, einen Einsatz für eine Portionskaffeemaschine zu entwerfen, der wenigstens einen wiederverwendbaren Bestandteil aufweist und der dem Benutzer eine sehr leicht zu handhabende Möglichkeit bietet, ein an den Einsatz zunächst angeordnetes Filterelement an der Matrize einer Portionskaffeemaschine anzuordnen.

Die Lösung dieses Problems gelingt mit einem Einsatz für eine Portionskaffeemaschine mit den Merkmalen der beigefügten Hauptansprüche. Weitere Merkmale der Erfindung sind den beigefügten Unteransprüchen zu entnehmen.

Dadurch, dass wenigstens ein Bestandteil des Einsatzes wiederverwendbar ausgebildet ist, wird einerseits die Menge des bei der Benutzung entstehenden Mülls reduziert. Andererseits wird der Konsument angehalten, bereits vorab eine Mülltrennung vorzunehmen, um einen wiederverwendbaren Teil des Einsatzes von dem wegzuwerfenden Rest zu trennen.

Die Erfindung kann verschiedene Ausprägungen aufweisen:
Einerseits kann der Kaffeebehälter selbst oder ein Teil desselben wiederverwendbar ausgebildet sein.

Andererseits kann der Einsatz neben dem eigentlichen Portionsbehälter ein oder mehrere weitere Teile aufweisen, welche wiederverwendbar sind. Bevorzugt handelt es sich hierbei um Teile, welche über mehrere, aufeinander folgende Brühvorgänge hinweg in der Portionskaffeemaschine verbleiben, insbesondere im Bereich des Orts für Kapseln, Pads od. dgl. Behälter beim Brühvorgang. Diese über einen gewissen Zeitraum innerhalb der Kaffeemaschine verbleibende Teile können dabei unterschiedliche Aufgaben erfüllen, bspw. als Anpress- und/oder Abdichtvorrichtung oder -hilfe, ferner als Filter- und/oder Schäumvorrichtung oder-hilfe, etc.

Mit dem hier beschriebenen System kann der Verbraucher also souverän entscheiden, ob er den in den Ansprüchen beschriebenen wiederbefüllbaren Einsatz oder eine Einwegkapsel beispielsweise vom Hersteller der Kaffeemaschine nutzen will. Die Einwegkapsel kann auch so modifiziert sein, dass sie wiederverwendbar ist.

Weitere Merkmale, Einzelheiten, Vorteile und Wirkungen auf der Basis der Erfindung ergeben sich aus der folgenden Beschreibung von bevorzugten Ausführungsformen der Erfindung sowie anhand der Zeichnung. Hierbei zeigen:
Fig. 1 einen topfförmigen Körper eines Portions-Einsatzes für die Portionskaffeemaschine in einer perspektivischen Ansicht;
Fig. 2 eine Explosionsschnittansicht bei einem Pressstock einer Portionskaffeemaschine, in welcher ein Portions-Einsatz gemäß einer ersten Ausführungsform zum Zubereiten von Kaffee einsetzbar ist;
Fig. 3 den Bereich beim Pressstock einer Portionskaffeemaschine, der zum Einsetzen eines Portions-Einsatzes gemäß einer ersten Ausführungsform zum Zubereiten von Kaffee präpariert ist;
Fig. 4 einen Schnitt durch ein Dichtungselement des Portions-Einsatzes aus den Fig. 1 bis 3 in einem Schnitt;
Fig. 5 das Detail VI aus Fig. 4 in einer vergrößerten Darstellung;
Fig. 6 eine Draufsicht auf die Fig. 4 in Richtung des Pfeils VII;
Fig. 7 einen topfförmigen Portionsaufnahmekörper einer abgewandelten Ausführungsform der Erfindung in einem Vertikalschnitt entlang der Symmetrieachse des Körpers;
Fig. 8 das Detail IX aus Fig. 7 in einer vergrößerten Darstellung;
Fig. 9 eine Draufsicht auf die Fig. 7 in Richtung des Pfeils X;
Fig. 10A, 10B eine der Fig. 5 entsprechende Darstellung einerseits sowie dieselbe Ansicht nach Entfernung des Dichtrings;
Fig. 11A, 11B den Fig. 10A und 10B entsprechende Darstellungen einer anderen Ausführungsform der Erfindung;
Fig. 12A, 12B den Fig. 10A und 10B entsprechende Darstellungen einer abgewandelten Ausführungsform der Erfindung;
Fig. 13A, 13B den Fig. 10A und 10B entsprechende Darstellungen einer wiederum abgewandelten Ausführungsform der Erfindung;
Fig. 14 eine nochmals abgewandelte Ausführungsform der Erfindung in einer gesamten Schnittdarstellung;
Fig. 15 eine nochmals abgewandelte Ausführungsform der Erfindung in einer gesamten Schnittdarstellung;
Fig. 16A - 16C nochmals abgewandelte Ausführungsformen der Erfindung in perspektivischen Ansichten (Fig. 16A und Fig. 16B) sowie in einer weiteren (Schnitt-) Ansicht (16C);
Fig. 17A - 17C eine nochmals abgewandelte Ausführungsform der Erfindung in perspektivischen Ansichten (Fig. 17A und Fig. 17B) sowie in einer weiteren (Schnitt-) Ansicht (Fig. 17C).
Fig. 18 und Fig. 19A und 19B jeweils Darstellungen einer weiteren Ausführungsform für einen Portions-Einsatz mit Filter;
Fig. 20 bis Fig. 23 jeweils Darstellungen noch einer weiteren Ausführungsform für einen Portions-Einsatz mit Filter; und
Fig. 24 bis Fig. 27 jeweils eine Seitenansicht eines Bevorratungssystems für einen oder mehrere Portions-Einsätze.

Auch wenn die Erfindung nachfolgend anhand einer Kaffeemaschine und insbesondere einer Portionskaffeemaschine beschrieben ist, ist die vorliegende Erfindung nicht darauf beschränkt. Die Erfindung kann auch bei anderen Getränkezubereitungsmaschinen zum Einsatz kommen.

Um mit einer Portionskaffeemaschine oder Kaffeemaschine guten Espresso herstellen zu können, müssen bestimmte Betriebsparameter eingehalten werden, wie z. B. Wassertemperatur, Druck und ein Filtersystem. Die sogenannte Schaumbildung (Crema) entsteht nur dann, wenn durch das Kaffeemehl mit Hilfe des Filtersystems Wasser mit einem hohen Druck von ca. 16 - 19 bar (1 bar = 10⁵ Pa) hindurch gepresst wird und das Filtersystem dem Druck einen bestimmten Fließwiderstand entgegensetzt. Das Filterelement des Filtersystems muss folglich so eingestellt sein, dass der Extraktionsprozess nicht zu schnell bzw. zu langsam erfolgt, beispielsweise in einer Zeit von etwa 7 - 20 Sekunden. Wird das Wasser zu schnell durch das Kaffeemehl gepresst, so werden verstärkt Bitterstoffe in das Getränk freigesetzt. Die Schaumbildung ist stark reduziert, der Kaffee ist dünn und bitter. Dauert der Extraktionsprozess zu lange, so wird das heiße Wasser mit sehr hohem Druck durch das Kaffeemehl gepresst, die öligen Substanzen dominieren, die Schaumbildung ist sehr dunkel und leicht eingeschränkt.

Nachfolgend ist ein System mit einem Einsatz für eine Kaffeemaschine beschrieben, bei welchem bei konstantem Extraktionsdruck die Durchlaufzeit des Wassers über den Durchflusswiderstand des Filterelementes derart einstellbar ist, dass das heiße Wasser durch das Kaffeemehl in einer bestimmten optimalen Zeitspanne durch das Filterelement hindurch gepresst wird, um vorzugsweise eine besonders starke Schaumbildung (Crema) zu erreichen.

Das vorgestellte System beruht auf einem Matrizenfiltersystem. Bei einem solchen Matrizenfiltersystem ist eine Filtermembrane für einen Einsatz in die Portionskaffeemaschine oder Kaffeemaschine vorgesehen, der mit einer Filtermatrize der Kaffeemaschine oder Espressomaschine als hochwirksames Filtersystem zusammenwirkt. Das Filtersystem hält den Kaffeesatz wirkungsvoll zurück, verstopft nicht und setzt einer Hochdruckpumpe der Kaffeemaschine einen nahezu konstanten Fließwiderstand entgegen.

Bei der vorliegenden Erfindung können in ein bestehendes Kaffeemaschinenkonzept Filterelemente dauerhaft entweder über einen Pressstock der Kaffeemaschine oder über eine in die Kaffeemaschine einzulegenden Einsatz eingeführt werden, der als Kapsel ausgebildet sein kann.

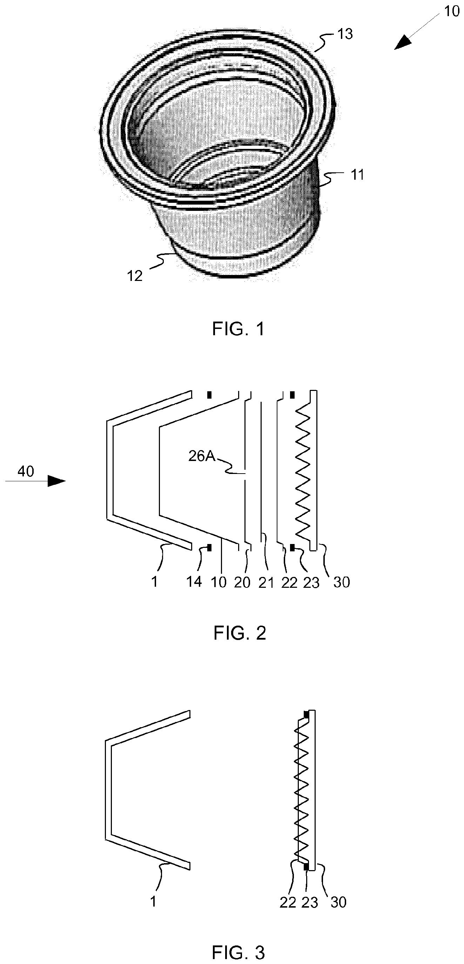

In Fig. 1 ist der topfförmige Unterteil eines Aufnahmebehälters eines erfindungsgemäßen Einsatzes 10 wiedergegeben. Dieser Einsatz 10 besteht vorzugsweise aus massivem Metall, bspw. aus Edelstahl, insbesondere V2A, aus Aluminium, aus einem magnetischen oder unmagnetischen Metall, Titanlegierungen, Silber, Gold usw., kann aber auch aus einem anderen, harten Werkstoff gefertigt werden, bspw. einem harten Kunststoff, insbesondere Polypropylen (PP), usw.. Das Material des Einsatzes 10 ist vorzugsweise lebensmitteltauglich. Man erkennt in Fig. 1 eine konische, sich nach unten verjüngende Mantelfläche 11, sowie eine stufenartige Verjüngung 12 im unteren Bereich. Die Mantelfläche 11 und ein in Fig. 1 nicht sichtbarer Boden bilden einen Behälter des Einsatzes 10. Der Boden selbst weist mehrere in Fig. 1 nicht sichtbare Öffnungen, insbesondere in Form von Bohrungen, auf, durch welche der Wassereintritt erfolgen kann. Im Bereich des Randes gibt es einen rundum laufenden, sich nach außen erstreckenden Wulst 13. Dessen Oberseite dient der Anlage an der Matrize einerseits, während die Unterseite an einer Spannvorrichtung der Kaffeemaschine anliegt.

Ein Dichtungsring umgreift diesen Wulst 13 an beiden Seiten und dichtet gegenüber der Matrize einerseits und gegenüber der Spannvorrichtung andererseits ab.

Fig. 2 zeigt in einer Explosionszeichnung, wie der Einsatz 10 in einen Pressstock 1 der Kaffeemaschine montierbar ist. Hierfür kommt neben einem Dichtungselement 14 am Einsatz 10 noch ein Membranhalter oder Halter 20, der als Sieb oder mit mindestens einer Öffnung, wie in Fig. 2 dargestellt, ausgeführt sein kann, eine, insbesondere fest, beidseitig haftende Klebebeschichtung 21, eine möglichst dichte Filtermembrane 22, ein Klebeauftrag 23, und eine Matrize 30 zum Einsatz. Hierbei bilden der Halter 20, die Klebebeschichtung 21, die Filtermembrane 22 und der Klebeauftrag 23 eine fertig montierte Baugruppe, von der ein Teil als Filter dient. Die Baugruppe bildet einen Deckel für den Einsatz 10. Die Klebebeschichtung 21 ist beispielsweise ein wasserlösliches Haftmittel. Der Klebeauftrag 23 ist beispielsweise ein Permanentkleber.

Bei der erstmaligen Verwendung des Einsatzes 10 in der Kaffeemaschine wird an einem leeren Einsatz 10, der mit dem Dichtungselement 14 versehen ist, die Baugruppe aus Halter 20, Klebebeschichtung 21, Filtermembrane 22 und Klebeauftrag 23 montiert. Anschließend wird der Einsatz 10 einschließlich der Baugruppe 20, 21, 22, 23 in die Kaffeemaschine eingesetzt wie eine Einwegkapsel für die Kaffeemaschine. Danach wird ein nicht dargestellter Verschluss zum Halten des Einsatzes 10 in dem Pressstock 1 gespannt. Der Einsatz 10 wird mit dem Halter 20, der über die Klebebeschichtung 21 mit der Filtermembrane 22 verbunden ist ringförmig gegen die Matrize 30 gepresst, so dass die Filtermembrane 22 über den Klebeauftrag 23 an der Matrize 30 durch den Klebeverbund hält. Die Matrize 30 hat ein oder mehrere in Richtung zu der zu perforierenden Filtermembrane 22 hervorstehende Erhebungen, die bspw. kegel- oder pyramidenförmig oder -stumpfförmig ausgebildet sind.

Wird nun der Einsatz 10 in Richtung des Pfeils 40 mit Druck und Wasser beaufschlagt, wird die Filtermembrane 22 durch das aus einer Öffnung 26A des Halters 20 austretende Wasser gegen die Matrize 30 gepresst. Dadurch entfernt sich die Filtermembrane 22 von dem formstabilen Halter 20 und der bisherige Klebeverbund aufgrund der Klebebeschichtung 21 zwischen Halter 20 und der Filtermembrane 22 wird aufgehoben. Jedoch haftet die Filtermembrane 22 mit Hilfe des Klebeauftrags 23 an der Matrize 30.

Öffnet man den Spannverschluss, dann fährt der Einsatz 10 samt Halter 20 und der eventuell noch verbliebenen Klebebeschichtung 21 zurück und fällt in einen nicht dargestellten Kapselauffangbehälter der Kaffeemaschine hinein. Die Kaffeemaschine ist nun im Bereich gegenüber dem Pressstock 1 ausgestaltet, wie in Fig. 3 gezeigt. Die Filtermembrane 22 haftet mit Hilfe des Klebeauftrags 23 dauerhaft an der Matrize 30. Dadurch ist die Kaffeemaschine nun für die Zubereitung von Kaffee, insbesondere Espresso, usw., mit dem Einsatz 10 präpariert und damit betriebsbereit.

Nachdem der Halter 20 entfernt wurde, kann der Benutzer den Einsatz 10 wieder mit Kaffeemehl befüllen und den Einsatz 10 anschließend wie eine normale Einwegkapsel in die Kaffeemaschine einsetzen. Dieser Vorgang ist beliebig wiederholbar.

Soll die Kaffeemaschine wieder in den ursprünglichen Zustand zurückversetzt werden, so geschieht dies auf ähnliche Weise wie beim zuvor beschriebenen Einbringen der Filtermembrane 22. In den leeren Einsatz 10, also einen nicht mit Kaffeemehl gefüllten Einsatz 10, wird ein Halter 20 mit der fest haftenden beidseitigen Klebebeschichtung 21 in die Kaffeemaschine eingelegt und der Verschluss gespannt. Der Einsatz 10 wird mit dem Halter 20 flächig gegen die perforierte Filtermembrane 22 gepresst, so dass der Halter 20 einen Klebeverbund mit der Filtermembrane 22 eingeht. Öffnet man den Verschluss, dann fährt der Einsatz 10 samt dem Halter 20 und der Filtermembrane 22 mit Klebeauftrag 23 zurück und fällt in den nicht dargestellten Kapselauffangbehälter hinein. Dadurch ist die Kaffeemaschine wieder in den ursprünglichen Zustand zurückversetzt und befindet sich in der Lage, für die Kaffeemaschine auch andere Einsätze, wie beispielsweise die Originaleinwegkapseln, zu nutzen.

Ein Benutzer der Kaffeemaschine kann also souverän entscheiden, ob und wann er den Einsatz 10, also das wieder befüllbare Kapselsystem, oder eine Einwegkapsel für die Kaffeemaschine nutzen möchte.

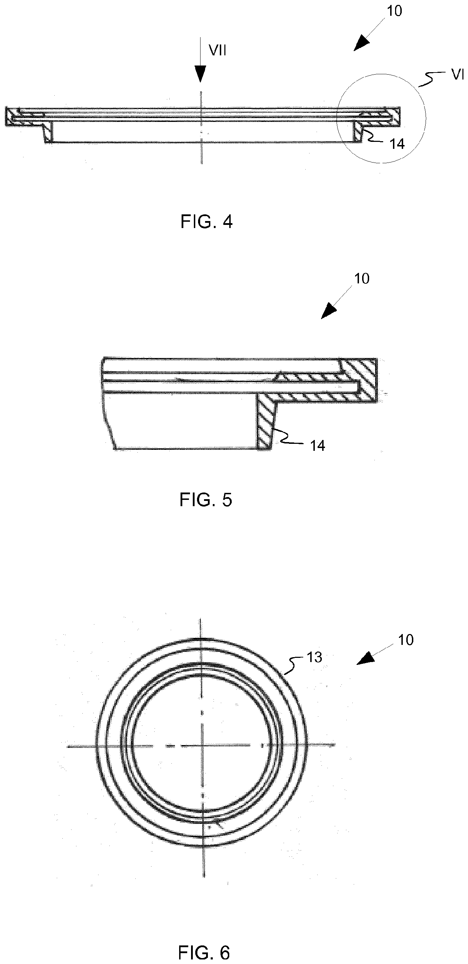

In Fig. 4 ist das Dichtungselement 14, das als Dichtring ausgeführt ist, an dem Portions-Einsatz 10 aus den Fig. 1 bis 3 in einem Schnitt gezeigt. Noch deutlicher ist der Dichtring 14 in Fig. 5 dargestellt. Fig. 6 zeigt zudem eine Draufsicht auf die Fig. 5 in Richtung des Pfeils VII in Fig. 4. In Fig. 6 ist der Wulst 13 und die zum Boden des Einsatzes 10 konisch zulaufende Form des Einsatzes 10 in einer anderen Darstellung ersichtlich. Die Öffnungen am Boden des Einsatzes 10 sind in Umfangsrichtung der Mantelfläche 11 und des Bodens angeordnet, so dass diese in Fig. 6 nicht sichtbar sind.

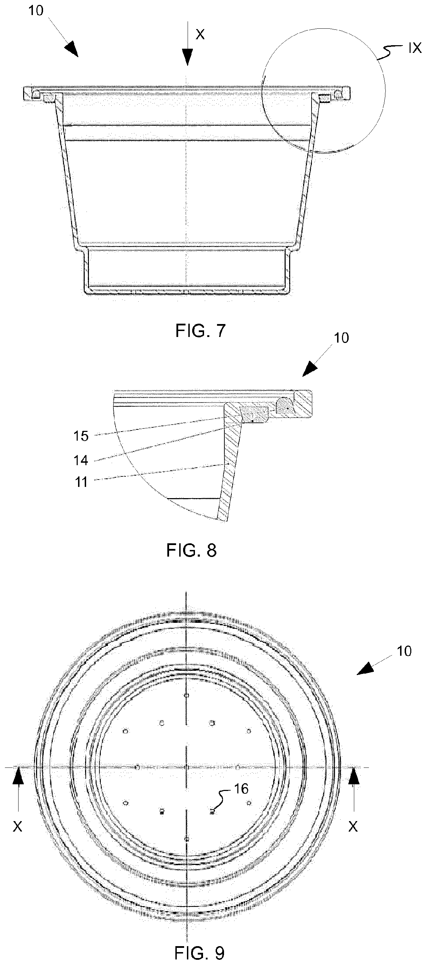

Fig. 7 zeigt einen topfförmigen Portionsaufnahmekörper einer abgewandelten Ausführungsform in einem Vertikalschnitt entlang der Symmetrieachse des Einsatzes 10. Das in Fig. 7 mit einem Kreis bezeichnete Detail IX ist in Fig. 8 in einer vergrößerten Darstellung gezeigt. In diesem Fall hat der Einsatz 10 die Dichtungselemente 14 und 15, die jeweils als Dichtringe ausgeführt sind. Fig. 9 zeigt dazu eine Draufsicht auf den Einsatz 10 von Fig. 7 in Richtung des Pfeils X. In Fig. 9 sind Öffnungen 16 im Boden des Einsatzes 10 sichtbar durch welche der Wassereintritt in den Einsatz erfolgen kann.

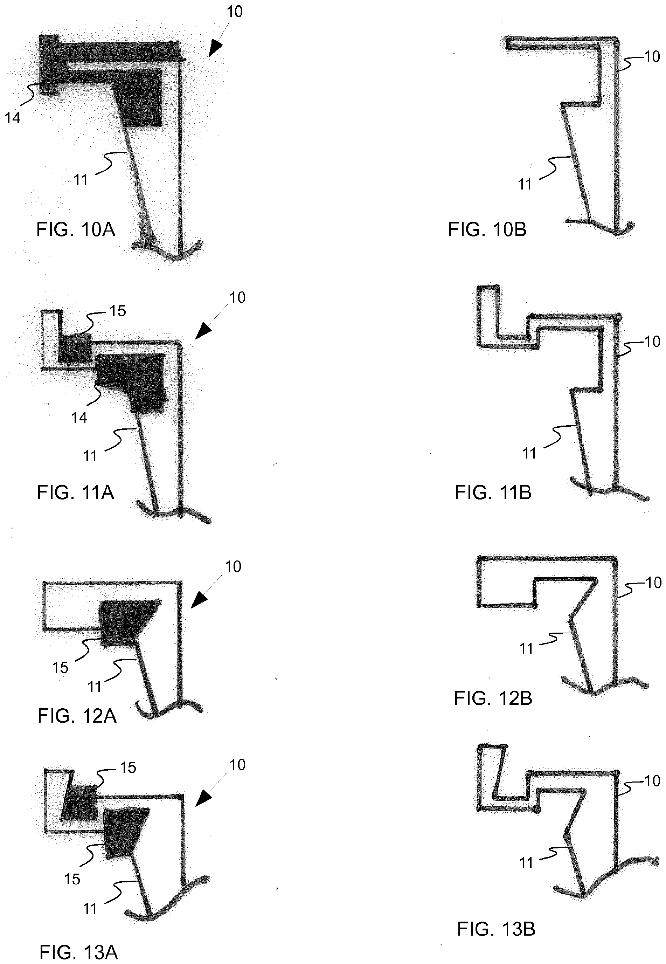

Die Kapsel oder der Einsatz 10 muss grundsätzlich gegen den Presssitz der Kapselaufnahme und gegen die Matrize/Matrizenblech abdichten. Mögliche Bauformen des Dichtungssystems sind in den Fig. 10A bis 13B dargestellt:
In Fig. 10A umschließt ein einziges Formdichtungselement den Wulst 13 bzw. Einsatzring bzw. Kapselring vollständig. Das Dichtungselement 14 dichtet gegen den Presssitz der Spanneinrichtung sowie gegen die gegenüber liegende Matrize/Matrizenblech ab.

In Fig. 11A ist unten ein Dichtungselement 14 in Form einer Profil-/Formdichtung gegen den Presssitz vorgesehen. Durch eine Elastizität im Dichtungselement 14 erfolgt zusätzlich zur Abdichtungsfunktion des Presssitzes eine Zentrierung des Einsatzes 10 bzw. der Kapsel in der Kapselaufnahme der Kaffeemaschine. Oben in Fig. 11A ist ein Schnurdichtungselement 15 gegen die Filtermembrane 22 vorgesehen.

In Fig. 12A ist unten ein Schnurdichtungselement 15 gegen den Presssitz vorgesehen. Oben in Fig. 12A ist keine Dichtung vorgesehen. Ein für oben mögliches Dichtungselement 14 in Form des Dichtungsrings 14 ist stattdessen auf einer Filtermembrane 22 aufgeklebt, die in der Kaffeemaschine verbleiben kann oder nicht benötigt wird, da der Kaffeesatz selbst abdichtend wirkt.

In Fig. 13A ist unten ein Schnurdichtungselement 15 gegen den Presssitz vorgesehen. Oben in Fig. 13A ist ein Schnurdichtungselement 15 gegen die Filtermembrane 22 vorgesehen.

Der topfförmige Behälter des Einsatzes 10 kann durch einen Deckel verschlossen werden, falls dieser Öffnungen aufweist, oder das Kaffeepulver wird durch Einpressen fixiert.

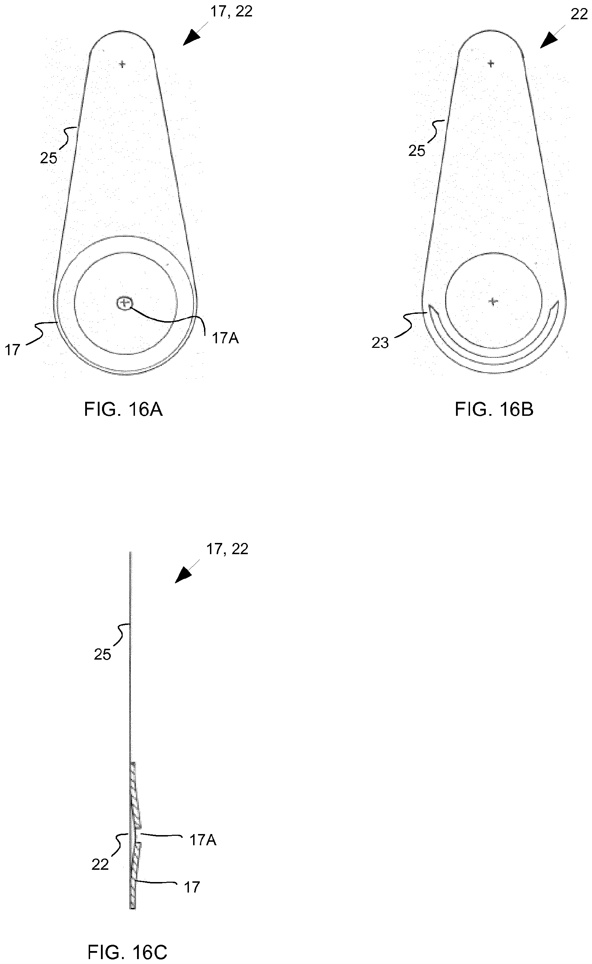

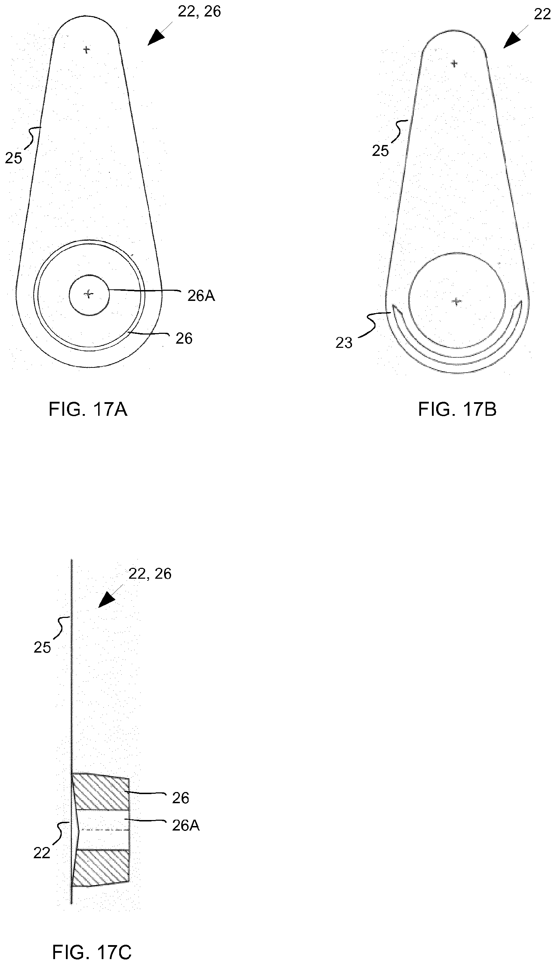

Gemäß einer weiteren Ausführungsform ist es denkbar, damit das Mehrweg-Kapselsystem einwandfrei funktionieren kann, dass vor der Inbetriebnahme eine Filtermembrane 22 vorzugsweise aus Aluminium oder Kunststoff mittels einer Mehrwegkapsel bzw. eines Einsatzes 10 vorzugsweise aus Edelstahl, Aluminium, Kunststoff dauerhaft, jedoch wenn gewollt lösbar, vor der Matrize fixiert wird. Der Benutzer der Kaffeemaschine kann die Filtermembrane 22 mittels einer gegebenenfalls vorhandenen Lasche, die später in Bezug auf Fig. 16 und 17 beschrieben ist, greifen und von der Matrize abziehen. Durch Entfernen der Filtermembrane 22 wird der Urzustand der Kaffeemaschine wieder hergestellt.

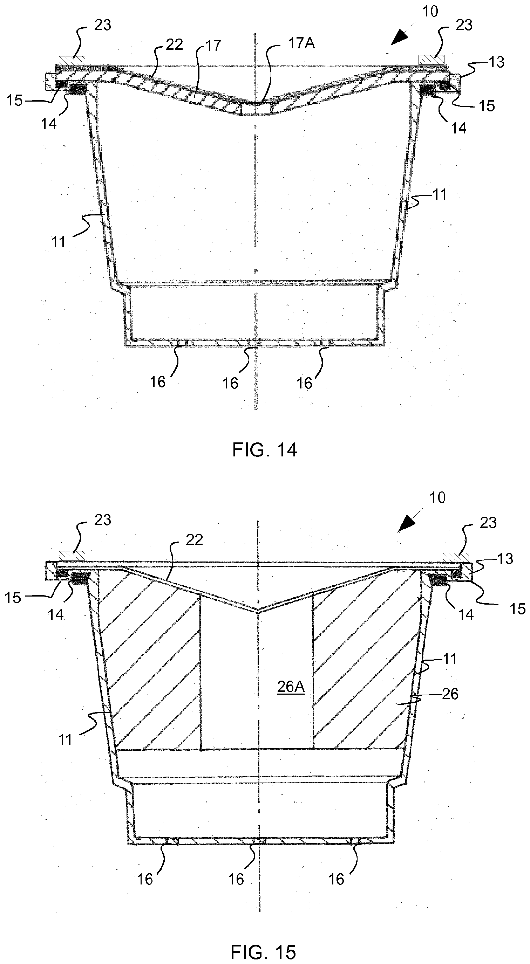

Dieses Prinzip ist in den Fig. 14 und folgende dargestellt und lässt sich, ähnlich wie in Bezug auf Fig. 2 und Fig. 3 beschrieben, dadurch realisieren, dass der umlaufende Kapselrand eine kreisrunde gewölbte Trägerscheibe 17 aufnimmt. Die Filtermembrane 22 ist auf dieser mittels eines nicht dargestellten wasserlöslichen Klebstoffes, z. B. Lebensmittelfarbe, zentrisch aufgebracht. Jedoch ist der Klebstoff nicht in dem Bereich aufgebracht, in welchem die Filtermembrane 22 an dem Wulst 13 des Einsatzes 10 aufliegt. Auf der gegenüberliegenden Seite der Filtermembrane 22 ist ein in etwa halbkreisförmiger nach unten offener Ringabschnitt eines doppelseitigen Klebeauftrags 23 in Form eines Klebefilms angebracht. Wird nun der Klebeauftrag 23 durch Abziehen der Schutzfolie freigelegt, kann nun das komplette Element mit in Fig. 14 nicht dargestellter Lasche mit der Kapsel bzw. dem Einsatz 10 nach unten in die Kaffee/Getränkemaschine eingelegt werden. Wird nun der Spannbügel der Kaffee/Getränkemaschine betätigt, so wird der Einsatz 10 oder die Kapsel samt Membrane 22 gegen den kreisringförmigen Sitz der Matrize 30 (Fig. 2 und Fig. 3) gepresst. Der frei liegende Klebeauftrag 23 auf der Filtermembrane 22 wird somit gleichzeitig gegen den Sitz der Matrize 30 (Fig. 2 und Fig. 3) gepresst, so dass ein Klebeverbund hergestellt wird. Die Filtermembrane 22 ist nun dauerhaft und präzise ausgerichtet vor der Matrize 30 (Fig. 2 und Fig. 3) positioniert. Wird nun die nicht dargestellte Pumpe der Kaffeemaschine aktiviert, so strömt heißes Wasser durch das mittlere Loch 17A zwischen der Trägerscheibe 17 und der Filtermembrane 22. Die Filtermembrane 22 löst sich aufgrund der Hitze des Wassers und des Druckes von der formstabilen Trägerscheibe 17 umlaufend ab, so dass der Klebeverband nun aufgehoben ist. Strömt weiter Wasser in den Einsatz 10 oder die Kapsel ein, so erhöht sich der Druck, der gegen die Filtermembrane 22 ausgeübt wird. Die Filtermembrane 22 wird solange gegen die pyramidenförmigen Segmente der Matrize 30 (Fig. 2 und Fig. 3) gepresst, bis sie annährend die Form der Matrize 30 (Fig. 2 und Fig. 3) angenommen hat. Am Ende des Prozesses wird die Filtermembrane 22 perforiert. Der Druck in dem Einsatz 10 oder der Kapsel fällt schlagartig ab. Der Prozess ist nun abgeschlossen. Der Verschluss der Maschine wird geöffnet. Der Einsatz 10 oder die Kapsel fällt samt gewölbter Scheibe in den Auffangbehälter der Maschine. Das Zentrier- und Halteelement, die Trägerscheibe 17, kann nun vom Benutzer mit einem einfachen Werkzeug aus dem Einsatz 10 oder der Kapsel entfernt und entsorgt werden. Um Reste des wasserlöslichen Klebestoffes des Klebeauftrags 23 restlich zu beseitigen, wird der leere Einsatz 10 oder die leere Kapsel erneut eingeführt und gespült. Das wiederbefüllbare Kapselsystem ist nun betriebsbereit.

Der Konsument kann nun die leere Kapsel mit Kaffeemehl befüllen, einlegen und mittels des Spannbügels der Maschine in Betriebsposition bringen. Wird nun die Pumpe betätigt, so wird heißes Wasser mit hohem Druck durch die befüllte Kapsel und die Filtermembrane 30, 22 gepresst. Die einwandfreie Funktion dieses Prozesses ist essenziell von der Qualität der eingebrachten Dichtungssysteme abhängig. Der Kapselkörper des Einsatzes 10 oder der Kapsel muss einerseits gegen den Presssitz der Kapselaufnahme und gleichzeitig gegen die Filtermembrane 22 an der Matrize 30 abdichten. Versagt eine oder beide Dichtungselemente, so bedeutet dies, dass durch den starken Druckabfall in der Kapsel die Qualität des Extraktionsprozesses des Kaffees eingeschränkt wird. Dies bedeutet, dass die Schaumbildung des Kaffees unterbrochen wird.

In Fig. 15 ist die Filtermembrane 22 mit einem Formteil 26 mit einer Öffnung 26A verbunden, so dass auf die Trägerscheibe 17 gemäß Fig. 14 verzichtet werden kann.

Fig. 16A zeigt in einer Draufsicht die Filtermembrane 22 mit einer Lasche 25 an der Trägerscheibe 17, die in Fig. 14 gezeigt ist. Fig. 16B zeigt nur die Filtermembrane 22 mit der Lasche 25 und dem Klebeauftrag 23. Fig. 16C zeigt Fig. 16A in einer Schnittansicht.

Fig. 17A zeigt in einer Draufsicht die Filtermembrane 22 mit einer Lasche 25 an dem Formkörper 26, der in Fig. 15 gezeigt ist. Fig. 17B zeigt nur die Filtermembrane 22 mit der Lasche 25 und dem Klebeauftrag 23. Fig. 17C zeigt Fig. 17A in einer Schnittansicht.

Im Rahmen eines Sonderaufbaus des Einführteils für Einwegkapseln bringt man wie vorher beschrieben statt einer Filtermembrane 22 (in einem Spezialfall nicht benötigt, weil auf Einwegkapseln aufgeschweißt), ein kreisringförmiges Dichtungselement mit Lasche auf dem Matrizenkörper an, so dass in betriebsbereitem Zustand (Spannbügel der Kaffeemaschine betätigt) der Presssitz der Kapselaufnahme gegen den Kreisring der Einwegkapsel drückt. Die andere Seite des Kreisringes der Kapsel drückt gegen das eingebrachte Druckelement. Durch die Elastizität des Gummielementes kann bspw. die PP-Folie eines Kapselkörpers besser den Konturen des Presssitzes der Kapselaufnahme besser folgen, was eine erheblich bessere Abdichtung der Einwegkapsel ermöglicht. Da der Aludeckel mit dem Kreisring des Kapselbehälters fest verschweißt ist, wird hier keine zusätzliche Dichtung benötigt. Es muss hier nur die Seite des Presssitzes der Kapselaufnahme abgedichtet werden.

Eine weitere Variante der Einlegeeinheit ist für Kaffeemaschinen ohne Matrizenextraktionseinheit konzipiert. Diese Variante besteht aus einer Filtermembrane 22 von Fig. 2 und Fig. 3, die fest verbunden mit einer Matrize 30 ist. In diesem Fall ist der Klebeauftrag 23 nicht an der Seite der Matrize 30 angebracht, welche der Filtermembrane 22 zugewandt ist, sondern auf der von der Filtermembrane 22 abgewandten Seite. der Matrize 30 Bei Kaffeemaschinen ohne Extraktionseinheit besteht dadurch die Möglichkeit, je nach Konstruktionsprinzip eine komplette Extraktionseinheit in ein bestehendes Maschinenkonzept zu integrieren. Man kann so z. B. eine gewöhnliche Kaffeepadmaschine zusätzlich mit einer kompletten Extraktionseinheit ausstatten, die wie vorher beschrieben dauerhaft in der Kaffeemaschine verbleibt. Somit kann die Extraktionsqualität des Kaffees auch bei dieser Art der Kaffeemaschinen erheblich aufgewertet werden; und/oder eine Verbesserung des Schäumungsvorganges erzielt werden.

Auch die Matrize 50 kann eine oder mehrere in Richtung zu der zu perforierenden Folie hervorstehende Erhebungen umfassen, die bspw. kegel- oder pyramidenförmig oder - stumpfförmig ausgebildet sind.

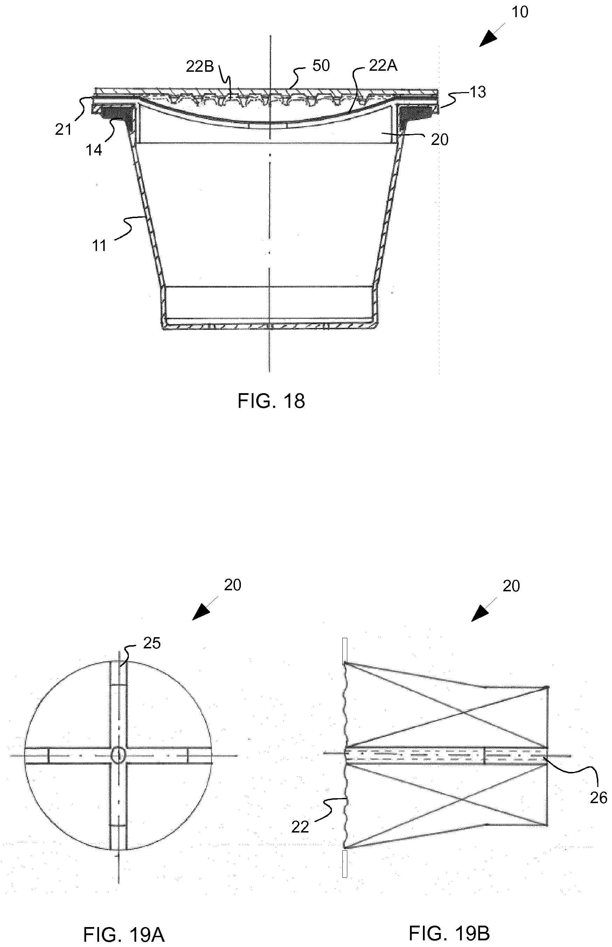

Fig. 18 zeigt einen Einsatz 10 mit einem Halter 20 mit einer Mulde. Das Bezugszeichen 22A bezeichnet die Filtermembrane 22 vor der Montage. Das Bezugszeichen 22B bezeichnet die Filtermembrane 22 nach der Montage, also im betriebsfertigen Zustand. Die Matrize 50 ist dann in der sonst nicht weiter dargestellten Kaffeemaschine fest montiert.

Für die Form der Mulde des Halters 20 für die Filtermembrane 22 in Fig. 18 können verschiedenste Formen und Gestaltungen angewendet werden. Beispielsweise sind schachbrettartige Erhebungen und Vertiefungen oder ringförmige Erhebungen und Vertiefungen oder Freiformflächen, etc. möglich. Für eine Klebeverbindung zwischen Halter 20 und Filtermembrane 22 sind wasserlösliche und/oder hitzelösliche lebensmittelechte Klebstoffe bevorzugt, die flächig oder in einzelnen Punkten aufgetragen werden können. Solche Klebstoffe können Zucker, Honig, Stärke, Acryl, Silikon-, Heiß- und Siegelklebstoffe, etc. sein. Das Material der Klebstoffbeschichtung 21 für die der Filtermatrize 50 zugewandte Seite kann als Kleberaupe oder Segment oder als einzelne Punkte kreisringförmig aufgetragen werden. Für das Material der Klebstoffbeschichtung 21 ist auch ein doppelseitiges Acrylklebeband, etc. wie in Bezug auf die Ausführungsform von Fig. 2 und Fig. 3 beschrieben möglich. Das Material der Klebstoffbeschichtung 21 kann auch lebensmittelecht sein.

Der Halter 20 in Fig. 18 hat die Aufgabe, mit Hilfe einer muldenförmigen Ausnehmung über einen wasser- und hitzelöslichen lebensmittelechten Klebstoff den Klebeverbund zur Filtermembrane 22 herzustellen, die in Fig. 19B dargestellt ist. Fließt heißes Wasser in die Kapsel oder den Einsatz 10, so wirkt Hitze und Druck entsprechend der Fläche auf die Filtermembran 22. Die Klebstoffbeschichtung 21 löst sich auf und gestattet der Filterembrane 22 eine Entfernung von der Mulde des Halters 20, so dass sich beide Teile trennen. Die Filtermembrane 22 wird solange gegen die Matrize 50 gepresst, bis sie perforiert wird und Wasser hindurch treten kann An der der Matrize 50 zugewandten Seite der Filtermembrane 20 befindet sich die Klebstoffbeschichtung 21 (Fig. 18) in Form einer Kleberaupe oder Punkte, die die Aufgabe besitzen, sich mit der Filtermatrize 50 zu verbinden. Wird der Verschluss geöffnet so fällt der Einsatz 10 in einen nicht dargestellten Auffangbehälter, wie zuvor in Bezug auf Fig. 2 und Fig. 3 beschrieben. Das System ist nun betriebsbereit.

Sinn der Muldenform des Halters 20 in Fig. 18, welcher die Filtermembrane 22 folgt, ist, dass die Folie der Filtermembrane 22 beim Pressvorgang auf die Matrizenkegel in den Stegbereichen keine Risse bekommt und Kaffeemehl die sich darunter befindlichen Abflusslöcher verstopft. Dadurch kann auch vermieden werden, dass die Filterfläche eingeschränkt wird, was eine Qualitätsminderung darstellen würde. Der Halter 20 muss so konstruiert sein, dass er fest mit dem Einsatz 10, aber, wenn gewollt, lösbar in Verbindung steht. Damit sich der Halter 20 nicht ungewollt aus dem Behälter des Einsatzes 10 löst, kann z.B. eine radial umlaufende Nut im Innenbereich des Einsatzes 10 eingedreht sein. Der Halter 20 weist für diese Nut eine passende ringförmige Erhebung auf, die beim Zusammenfügen mit dem Kapselbehälter des Einsatzes 10 einrastet, so dass beide Teile fest verbunden sind. Dies gilt für beide Fälle, nämlich das Einbringen der Filtermembrane 22 in die Kaffeemaschine und für das Entfernen der Filtermembrane 22 aus der Kaffeemaschine.

Eine weitere Möglichkeit, den Halter 20 in der Kapsel oder dem Einsatz 10 zu verankern, besteht darin, den Halter 20 so auszugestalten, dass er sich schwergängig in den Einsatz 10 schieben lässt.

Um eine verschlissene Filtermembrane 22 aus der Kaffeemaschine entfernen zu können, wird auf den Halter 20 eine doppelseitig stark klebendes Klebeband aufgebracht, das dem Durchmesser der Filtermembrane entspricht. Nun sind Halter 20 und Klebeband fest verbunden. Der Benutzer zieht ein Schutzelement vom Halter 20 ab, so dass die klebende Seite aktiviert ist. Wird die Kapsel oder der Einsatz 10 in den Pressstock 1 der Kaffeemaschine gelegt und der Verschluss gespannt, so geht der Halter 20 mit der Filtermembrane 22 gewollt einen Klebeverbund ein. Der Verschluss wird geöffnet, dieser fährt Kapsel samt Halter 20 und Membrane 22 in die Ausgangsstellung zurück und fällt in den Auffangbehälter der Kaffeemaschine, wie zuvor bereits beschrieben. Die Membrane 22 ist nun aus der Kaffeemaschine entfernt und der Urzustand ist wieder hergestellt. Der Benutzer nimmt die Kapsel oder den Einsatz 10 und kann mittels eines Werkzeugs in dafür vorgesehene Löcher des Halters 20 greifen und ihn damit entfernen.

Die Einströmöffnungen für das druckbeaufschlagte Wasser in Fig. 18 können sich im Bodenbereich befinden und dort axial und/oder radial angeordnet sein. In diesem Fall verläuft der Weg des Wassers ausschließlich in axialer Richtung durch das Kaffeemehl im Einsatz 10.

Alternativ können sich die Einströmöffnungen für das druckbeaufschlagte Wasser in Fig. 18 in der Nähe des Dichtungselementes 14 und im Bodenbereich jeweils in radialer Richtung des Einsatzes 10 befinden. In diesem Fall verläuft der Weg des Wassers in axialer und radialer Richtung. Die Größe der Löcher im Bodenbereich bzw. im Dichtungsbereich ist für die Fließrichtung entscheidend.

Gemäß einer weiteren Alternative können sich die Einströmöffnungen für das druckbeaufschlagte Wasser in Fig. 18 am gesamten Kapselkörper des Einsatzes 10 in axialer und radialer Richtung des Einsatzes 10 befinden In diesem Fall wirkt das Wasser von allen Richtungen auf das Kaffeemehl und es existiert keine Fließvorzugsrichtung.

In Fig. 18 ist das Dichtelement 14 ein Dichtring. Der Dichtring ist hierbei derart ausgestaltet, dass sein Querschnitt mit zunehmendem Durchmesser des Dichtrings axial abnimmt. Ein Spezialfall eines solchen Dichtrings ist in Fig. 18 gezeigt.

In Fig. 19A und Fig. 19B ist ein Formkörper des Halters 20 dargestellt, der einen kreisringförmigen Rand zur Anlage an dem Einsatz 10 aufweist. Der Formkörper ist derart ausgestaltet, dass der Halter 20 sowohl an dem Wulst 13 des Einsatzes 10 als auch an den Boden des Einsatzes 10 anliegt. Das mittige Loch des Halters 20 ist mit einem Gewinde 26 versehen. In dieses Gewinde 26 kann der Benutzer eine nicht dargestellte Schraube hineinschrauben. Dann drückt die Schraube gegen den Kapselboden und schiebt somit den Halter 20 heraus. Hierbei können kreuzförmig angeordnete Stege 25 Verwendung finden Außerdem ist es möglich, einen Gewindezapfen im Zentrum des dem Inneren des Einsatzes 10 zugewandten Kapselbodens oder Boden des Einsatzes 10 mit dem Boden fest zu verbinden, um den Halter 20 darauf schrauben zu können. In diesen beiden Fällen kann der Halter 20 eine Spielpassung aufweisen und sollte nicht straff sitzen. Der Formkörper kann jedoch auch auf eine andere Weise in dem Einsatz 10 befestigt werden, beispielsweise mit einer Schraubschnappverbindung, einer Schnappverbindung, usw.

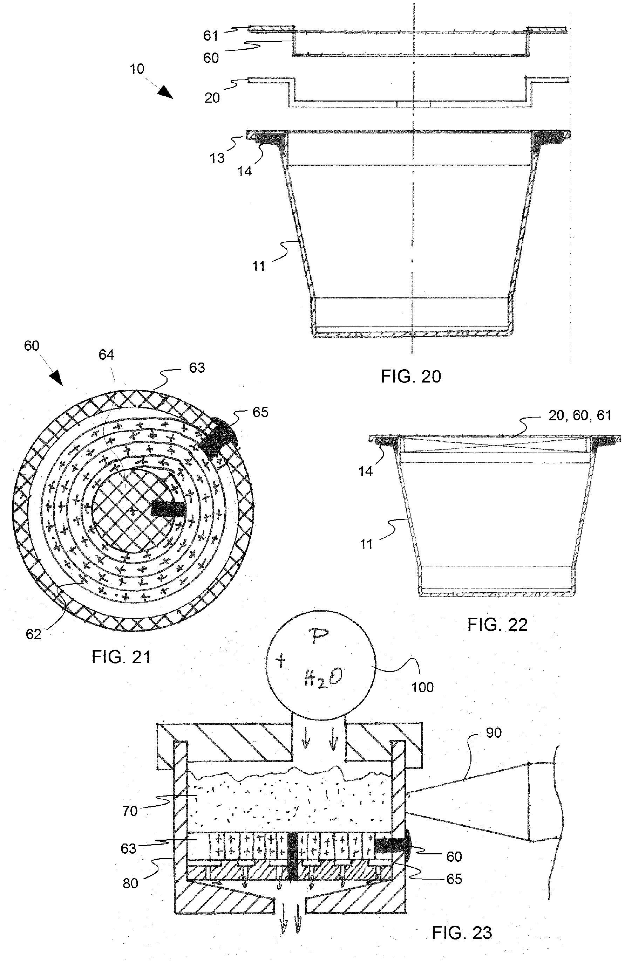

Fig. 20 zeigt einen Einsatz 10, in den ein Filterelement 60 mit einem Klebstoff- oder Haftmittelauftrag 61 an seiner Öffnung ein- bzw. aufsetzbar ist. Der Einsatz 10 hat wieder ein Dichtungselement 14 unten an seinem Wulst 13 angeordnet.

In Fig. 20 ist der Einsatz 10 ein Kapselkörper mit einem Dichtungselement 14 als Formdichtring. Der Formdichtring ist Fig. 20 und Fig. 22 in einer Schnittdarstellung gezeigt. Mit steigendem Radius des Dichtungselementes 14 nimmt seine Dicke in axialer Richtung ab. In Fig. 20 beträgt der Winkel zwischen Wulst 13 und der Mantelfläche 11 ca. 103°.

Der Formdichtring, also das Dichtungselement 14, sollte in seinem Durchmesser erheblich kleiner sein als das Aufnahmeprofil des Einsatzes 10 oder der Kapsel, damit der Formdichtring straff sitzt und der Druckrichtung des Wassers entgegenwirkt. Ein aufgrund des hohen Wasserdruckes unerwünschtes Austreiben des Dichtungselementes 14 zwischen dem druckbeaufschlagten Presskegels und dem Körper des Einsatzes 10 oder dem Kapselkörper wird wirkungsvoll entgegengewirkt. Eine andere Möglichkeit ist, ein zum Kapselkörper im Durchmesser passgenaues Dichtungselement festzukleben.

Fig. 21 zeigt das Filterelement 60 genauer in der Draufsicht. Das Filterelement 60 hat ein Band 62 von bestimmter Breite und Dicke. Das Band 62 ist in einem Filtergehäuse 63 um einen Kern 64 schneckenförmig aufgewickelt, so dass sich die Lagen des Bands 62 berühren, z. B. so wie bei einer Packbandrolle, jedoch ist kein Klebstoff zwischen den Lagen angeordnet. Das Band 62 ist mit zwei Befestigungselementen, insbesondere Bolzen, usw., 65 an dem Filtergehäuse 63 und dem Kern 64 verdrehsicher befestigt. Dadurch bleibt die auf die Wicklung des Bandes 62 radial wirkende Vorspannung der einzelnen Lagen des Bandes 62 erhalten. Die Vorspannung ist für das einwandfreie Funktionieren des Filters erforderlich, wie nachfolgend in Bezug auf Fig. 23 beschrieben. Das ungewollte Verdrehen der einzelnen Lagen des Bandes 62 kann auch durch partielle Verklebung oder mittels eines nicht dargestellten Stiftes vermieden werden, der die einzelnen Lagen des Bandes 62 in radialer Richtung durchdringt. Eine andere Möglichkeit besteht darin, eine Nut in radialer Richtung in die vom Filterelement 60 gebildete Schnecke zu fräsen und in die so gebildete Ausnehmung einen passenden Stab einzulegen.

Ist das Band 62 dünn, so passen in einem bestimmten Durchmesser des Filterelements 60 mehr Lagen hinein als wenn das Band 62 dick ist. Bei mehr Lagen des Bandes 62 hat das Filterelement 60 eine größere Filteroberfläche als bei weniger Lagen. Von dem Filterelement 60 werden Feststoffe wirkungsvoll zurückgehalten.

Zusammengefasst werden die Eigenschaften des Filterelementes 60 bestimmt
- über die Vorspannung des Bandes 62,
- die Dicke des Bandes 62, was die Anzahl der Wicklungen in einem Gehäuse 63 mit festem Durchmesser bestimmt,
- über die Breite des Bandes 62,
- über das Material des Bandes 62, wie Metall(e), Kunststoff(e), Textil(ein), Verbundstoff(e), etc. und Kombinationen davon.

In einer Variante der vorliegenden Ausführungsform kann das Filterelement 60 auch anstelle einer scheibenförmigen Ausdehnung auch eine Kegelform oder Pyramidenform aufweisen. Es sind auch andere Formen möglich.

Fig. 22 zeigt den Zustand, wenn das Filterelement 60 in den Halter 20 eingelegt oder in ihm angeordnet ist und der Halter 20 in den Einsatz 10 ein- bzw. aufgesetzt ist.

Besonderer Vorteil dieses Filtertyps mit einem Filterelement 60 ist eine sehr starke Schaumbildung des Kaffees. Daher ist das Filterelement 60 für den Einsatz in Espressomaschinen besonders geeignet.

Fig. 23 stellt einen Filter für Siebträgermaschinen dar, wie sie in Kaffeebars üblich sind. Das Filterelement kann, wie in Fig. 23 gezeigt, in einem Kapselkörper als Deckel eingesetzt werden oder in die Maschinen als Komplettelement eingeführt werden. Das Filterelement 60 ist im Kernbereich und gegen die Wand eines Gehäuses 80 derart mittels Dichtungselementen oder Gummierungen oder das Gehäuse 63 abgedichtet, dass das Durchfließen der Kaffeeflüssigkeit durch die Schneckenwicklung des Filterelements 60 erzwungen wird.

In Fig. 23 ist das Kaffeemehl 70 auf dem Filterelement 60 in dem Gehäuse 80 mit einem Griff 90 angeordnet. Das Filterelement 60 liegt auf einem Auflagegitter 65 auf. Beim Aufwickeln des Bandes 62 bestimmt die Vorspannung des Bandes 62, wie stark die benachbarten Lagen des Bandes 62 aneinanderdrücken und somit wie viel Druck das Filterelement 60 der in Fig. 23 nur sehr schematisch dargestellten Hochdruckpumpe 100 entgegengesetzt.

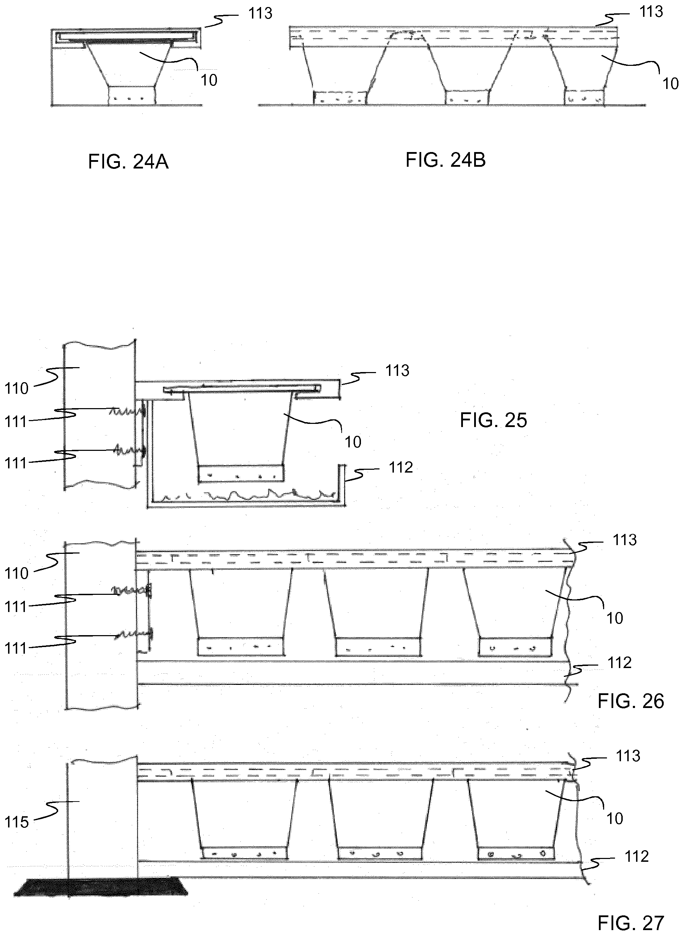

Fig. 24 bis Fig. 27 zeigen verschiedene Varianten eines Kapsel- und/oder Einsatzbevorratungssystems. In Fig. 24 bis Fig. 27 sind der Übersichtlichkeit halber nicht alle der Einsätze 10 mit einem Bezugszeichen versehen. Fig. 24A zeigt eine andere Seitenansicht des Kapsel- und/oder Einsatzbevorratungssystems als Fig. 24B.

In Fig. 25 und Fig. 26 sind die Kapsel- und/oder Einsatzbevorratungssysteme jeweils an einer Wand 110 mit Hilfe von Schrauben 111 befestigt. Unter den Einsätzen 10 ist jeweils eine Auffangschale 112 angeordnet, welche zum Auffangen von Kaffeemehlbröseln dient. Die Einsätze 10 sind jeweils in einer Haltevorrichtung 113 gehalten. In Fig. 27 sind die Auffangschale 112 und die Haltevorrichtung 113 an einem Standfuß 115 befestigt. Die Ausführung in Fig. 27 ist eine mobile Ausführung und hat vorzugsweise einen so schweren Standfuß 115, dass sie nicht umkippen kann. Die Auffangschale 112 ist lösbar und/oder abnehmbar an der Haltevorrichtung 113 angebracht.

Die Haltevorrichtung 113 ist eine seitlich auf beiden Seiten ausgenommene und zumindest nach unten offene Schiene, wie in Fig. 24A gezeigt. In die Schiene kann man ähnlich eines Magazins die gefüllten Einsätze 10 oder Kapselbehälter einschieben, so dass zumindest der obere Bereich der Schiene in Fig. 24A die Öffnung der Einsätze 10 oder Kapselbehälter nahezu luftdicht abschließt. Dies hat den Vorteil, dass das Kaffeemehl an der Umgebungsluft nicht oxidiert und folglich das Aroma und die Qualität erhalten bleibt. Ausführungsformen:
Alle zuvor beschriebenen Ausgestaltungen des Einsatzes 10 und der damit verwendbaren Teile und des Kapsel- und/oder Einsatzbevorratungssystems können einzeln oder in allen möglichen Kombinationen Verwendung finden. Insbesondere können die Merkmale der zuvor beschriebenen Ausführungsformen beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Eine andere Variante für die Nutzung einer Wegwerfkapsel für eine Kaffeemaschine besteht darin, ein kegelförmiges dünnwandiges Rohr passend in einen Originalkapselbehälter ähnlich eines Stents anzuordnen. Auf diese Weise ist es möglich, auch Originalkapselbehälter mehrfach zu nutzen. Das Rohr oder Einlegeteil verleiht dem Kapselbehälter der Wegwerfkapsel eine hohe Stabilität.

Die Filterfolie oder Filtermembrane 22 besteht in der Regel aus einer Aluminiumfolie, die eine Dicke von ca. 10 µm bis 80 µm haben kann. Die Filterfolie kann kaschiert und/oder beschichtet sein und/oder eine strukturierte Oberfläche aufweisen. Die Filterfolie kann aus Metall, wie Alu, Gold, Silber, V2A Stahl usw. gefertigt sein. Die Filterfolie kann eine Verbundfolie sein. Die Filterfolie kann auch eine Kunststofffolie, usw. sein, die z.B. aus PP etc., gefertigt ist

Der Klebstoffauftrag 23 auf der der Matrize 30 zugewandten Seite hat die Aufgabe, die positionierte Filtermembrane 22 an der Matrize 30 festzuhalten. Da die Filtermembrane 22 wieder von der Matrize 30 ablösbar sein soll, darf der Klebstoff an der Matrize 30 nicht stark haften, an der Filtermembrane 22 jedoch schon. Der Filtermembrane 22 kann ein Vorfilter vorgeschaltet sein, welcher mit der Filtermembrane 22 fest verbunden sein kann. Der Vorfilter kann aus einem vliesähnlichen Material sein. Der Vorfilter kann auch ein feines Gitter oder eine mit vielen kleinen Löchern perforierte Folie sein.

Der Einsatz 10 oder die Kapsel kann mit losen Kaffeemehl befüllt werden, welches gegebenenfalls. gepresst wird, damit es bei Benutzung nicht aus der Kapsel fällt. Es kann auch eine Filtermembrane aus Papier mit eingelegt werden. Auch kann der Einsatz 10 oder die Kapsel mit vorkonfektionierten Portionseinheiten befüllt werden, die aus kompostierbaren einmalverwendbaren Materialien bestehen.

Als Dichtungsmaterialien für die Dichtungselemente 14, 15 sind z.B. NBR, Silikon, alle lebensmitteltauglichen Gummiwerkstoffe, usw. mit einer Härte von ca. 20 - 80 Shore verwendbar.

Der Einsatz 10 kann auch aus einem feinen Metallsieb bestehen, wobei der Dichtungsbereich mit einer Gummierung umfassend umspritzt ist, wie in Fig.10 A gezeigt.

## Patentansprüche

1. Einsatz (10) für eine Portionskaffeemaschine, wobei der Einsatz (10) einen verschlossenen oder verschließbaren Behälter zur Aufnahme einer aufzubrühenden Portion des gemahlenen Kaffees umfasst, wobei wenigstens ein Bestandteil des Einsatzes (10) wiederverwendbar ausgebildet ist,
**dadurch gekennzeichnet,**
**dass** der Behälter eine an einem mindestens eine Öffnung (26A) aufweisenden Halter (20) über eine Klebebeschichtung (21) anhaftende Filtermembrane (22) aufweist, die einen Klebeauftrag (23) aufweist, wobei die Filtermembrane (22) durch aus der Öffnung (26A) des Halters (20) austretendes Wasser gegen eine Matrize (30) der Portionskaffeemaschine pressbar und dadurch von dem formstabilen Halter (20) entfernbar ist.

2. Einsatz (10) nach Anspruch 1, **dadurch gekennzeichnet,**
**dass** ein Bestandteil des Behälters wiederverwendbar ausgebildet ist.

3. Einsatz (10) nach Anspruch 1 oder 2, **dadurch gekennzeichnet,**
**dass** der Behälter als Kapsel oder Pad ausgebildet ist.

4. Einsatz (10) nach einem der Ansprüche 1 bis 3, **dadurch gekennzeichnet, dass** der Einsatz (10) einen topfförmigen Körper sowie einen diesen verschließbaren Deckel aufweist.

5. Einsatz (10) nach Anspruch 4, **dadurch gekennzeichnet,**
**dass** der Deckel in die Öffnung des Körpers einsetzbar und reibschlüssig fixierbar ist.

6. Einsatz (10) nach einem der vorhergehenden Ansprüche, **dadurch gekennzeichnet,**
**dass** der Rand des Behälters einen rundumlaufenden, nach außen ragenden Wulst (13) aufweist und dass im Bereich des Wulstes (13) ein oder zwei oder mehrere Dichtungselemente (14, 15) vorgesehen sind.

7. Einsatz (10) nach einem der vorhergehenden Ansprüche, **dadurch gekennzeichnet,**
**dass** ein wiederverwendbares Teil des Einsatzes (10) zwischen zwei aufeinanderfolgenden Verwendungen aus der Portionskaffeemaschine entnehmbar ist, insbesondere zur Befüllung mit Kaffeepulver.

8. Einsatz (10) nach einem der vorhergehenden Ansprüche, **gekennzeichnet durch** ein lösbar mit dem Behälter verbundenes Teil (22, 23; 50), welches in einer Portionskaffeemaschine mehrmals wiederverwendbar ist.

9. Einsatz (10) nach einem der vorhergehenden Ansprüche, **dadurch gekennzeichnet,**
**dass** das innerhalb der Portionskaffeemaschine verbleibende, wiederverwendbare Teil (22,23; 50) des Einsatzes (10) als Schäumvorrichtung oder -hilfe dient.

10. Einsatz nach Anspruch 9, **dadurch gekennzeichnet,**
**dass** die Schäumvorrichtung oder -hilfe ganz oder teilweise als perforierbare Folie ausgebildet ist und/oder dass die Schäumvorrichtung oder -hilfe ein schneckenförmiger Filter (60) ist.

11. Einsatz nach einem der Ansprüche 8 -- 10, **dadurch gekennzeichnet,**
**dass** das lösbar mit dem Behälter verbundene und innerhalb der Portionskaffeemaschine verbleibende, wiederverwendbare Teil des Einsatzes (10) als Dichtvorrichtung oder -hilfe dient.

12. Einsatz nach einem der Ansprüche 8 -- 11, **dadurch gekennzeichnet,**
**dass** ein lösbar mit dem Behälter verbundenes und zwischen zwei aufeinanderfolgenden Verwendungen innerhalb der Portionskaffeemaschine verbleibendes, wiederverwendbares Teil eine oder mehrere Laschen (51) aufweist, an welchen es nach der letztmaligen Verwendung zur Entnahme aus der Portionskaffeemaschine ergriffen werden kann.

13. Einsatz (10) für eine Portionskaffeemaschine, wobei der Einsatz (10) einen verschlossenen oder verschließbaren Behälter zur Aufnahme einer aufzubrühenden Portion des gemahlenen Kaffees umfasst, wobei wenigstens ein Bestandteil des Einsatzes (10) wiederverwendbar ausgebildet ist,
**dadurch gekennzeichnet,**
**dass** der Behälter eine an einem mindestens eine Öffnung (26A) aufweisenden Halter (20) über eine Klebebeschichtung (21) anhaftende Filtermembrane (22) aufweist, die fest verbunden ist mit einer Matrize, an deren von der Filtermembrane (22) abgewandten Seite ein Klebeauftrag (23) angebracht ist, wobei die Filtermembrane (22) durch aus der Öffnung (26A) des Halters (20) austretendes Wasser gegen die Portionskaffeemaschine pressbar ist und dadurch von dem formstabilen Halter (20) entfernbar ist.

14. Einsatz nach Anspruch 13, **dadurch gekennzeichnet,**
**dass** das innerhalb der Portionskaffeemaschine verbleibende, wiederverwendbare Teil (22,23; 50) des Einsatzes (10) als Schäumvorrichtung oder -hilfe dient und die Schäumvorrichtung oder -hilfe ganz oder teilweise als eine Folie perforierende Matrize (50) ausgebildet ist.

15. Einsatz nach Anspruch 14, **dadurch gekennzeichnet,**
**dass** die eine Folie perforierende Matrize (30; 50) ein oder mehrere in Richtung zu der zu perforierenden Folie hervorstehende Erhebungen aufweist, bspw. kegel- oder pyramidenförmige oder - stumpfförmige Erhebungen.

## Claims

1. Insert (10) for a single-serve coffee machine, wherein the insert (10) comprises a closed or closable container for receiving a portion of the ground coffee which is to be brewed, wherein at least one component of the insert (10) is designed to be reusable, **characterised in that** the container has a filter membrane (22) which has an adhesive layer (23) and which adheres by means of an adhesive coating (21) to a holder (20) having at least one opening (26A), wherein the filter membrane (22) can be pressed against a die (30) of the single-serve coffee machine by water exiting from the opening (26A) of the holder (20) and as a result can be removed from the dimensionally stable holder (20).

2. Insert (10) according to claim 1, **characterised in that** a component of the container is designed to be reusable.

3. Insert (10) according to claim 1 or 2, **characterised in that** the container is designed as a capsule or pod.

4. Insert (10) according to one of claims 1 to 3, **characterised in that** the insert (10) has a cup-shaped body as well as a cover which closes the latter.

5. Insert (4) according to claim 4, **characterised in that** the cover can be inserted into the opening in the body and can be fixed by frictional engagement.

6. Insert (10) according to one of the preceding claims, **characterised in that** the rim of the container has a circumferential outwardly projecting bead (13), and **in that** one or two or more sealing elements (14, 15) are provided in the region of the bead (13).

7. Insert (10) according to one of the preceding claims, **characterised in that** a reusable part of the insert (10) can be removed from the single-serve coffee machine between two successive uses, in particular for filling with coffee powder.

8. Insert (10) according to one of the preceding claims, **characterised by** a part (22, 23; 50) which is releasably connected to the container and which is reusable multiple times in a single-serve coffee machine.

9. Insert (10) according to one of the preceding claims, **characterised in that** the reusable part (22, 23; 50) of the insert (10) remaining inside the single-serve coffee machine serves as a foaming device or aid.

10. Insert according to claim 9, **characterised in that**
the foaming device or aid is formed completely or partially as a film which can be perforated and/or that the foaming device or aid is a spiral filter (60).

11. Insert according to one of claims 8 - 10, **characterised in that**
the reusable part of the insert (10) which is releasably connected to the container and remains inside the single-serve coffee machine serves as a sealing device or aid.

12. Insert according to one of claims 8 - 11, **characterised in that**
a reusable part which is releasably connected to the container and which between two successive uses remains inside the single-serve coffee machine has one or more tabs (51) by which, after it is used for the last time, it can be gripped for removal from the single-serve coffee machine.

13. Insert (10) for a single-serve coffee machine, wherein the insert (10) comprises a closed or closable container for receiving a portion of the ground coffee which is to be brewed, wherein at least one component of the insert (10) is designed to be reusable, **characterised in that** the container has a filter membrane (22) which adheres by means of an adhesive coating (21) to a holder (20) having at least one opening (26A) and which is fixedly connected to a die which has an adhesive layer (23) attached to the side of the die facing away from the filter membrane (22), wherein the filter membrane (22) can be pressed against the single-serve coffee machine by water exiting from the opening (26A) of the holder (20) and as a result can be removed from the dimensionally stable holder (20).

14. Insert according to claim 13, **characterised in that**
the reusable part (22, 23; 50) of the insert (10) remaining inside the single-serve coffee machine serves as a foaming device or aid and the foaming device or aid is designed completely or partially as a die (50) which perforates a film.

15. Insert according to claim 14, **characterised in that**
the die (30; 50) which perforates a film has one or more raised areas, for example conical or pyramid-shaped or frustum-shaped raised areas, which project towards the film to be perforated.

## Revendications

1. Insert (10) pour une cafetière à portions, dans lequel l'insert (10) comporte un contenant fermé ou pouvant être fermé destiné à loger une portion à infuser de café moulu, dans lequel au moins une partie de l'insert (10) est réutilisable,
**caractérisé en ce que**
le contenant présente une membrane filtrante (22) qui adhère à un support (20) présentant au moins une ouverture (26A) par l'intermédiaire d'un revêtement adhésif (21) et qui présente une couche de colle (23), dans lequel la membrane filtrante (22) peut être pressée contre une matrice (30) de la cafetière à portions par de l'eau sortant de l'ouverture (26A) du support (20) et peut ainsi être retirée du support (20) indéformable.

2. Insert (10) selon la revendication 1, **caractérisé en ce qu'**
une partie du contenant est réutilisable.

3. Insert (10) selon la revendication 1 ou 2, **caractérisé en ce que**
le contenant est réalisé sous la forme d'une capsule ou d'une dosette.

4. Insert (10) selon l'une quelconque des revendications 1 à 3, **caractérisé en ce que**
l'insert (10) présente un corps en forme de pot ainsi qu'un couvercle pouvant refermer celui-ci.

5. Insert (10) selon la revendication 4, **caractérisé en ce que**
le couvercle peut être inséré dans l'ouverture du corps et peut être fixé par friction.

6. Insert (10) selon l'une quelconque des revendications précédentes, **caractérisé en ce que**
le bord du contenant présente un bourrelet (13) circonférentiel faisant saillie vers l'extérieur et **en ce qu'**un ou deux éléments d'étanchéité (14, 15) ou plus sont prévus dans la zone du bourrelet (13).

7. Insert (10) selon l'une quelconque des revendications précédentes, **caractérisé en ce qu'**
une pièce réutilisable de l'insert (10) peut être retirée de la cafetière à portions entre deux utilisations successives, en particulier pour être remplie de café moulu.

8. Insert (10) selon l'une quelconque des revendications précédentes, **caractérisé par** une pièce (22, 23 ; 50) qui est reliée de manière détachable au contenant et qui peut être réutilisée à plusieurs reprises dans une cafetière à portions.

9. Insert (10) selon l'une quelconque des revendications précédentes, **caractérisé en ce que**
la pièce (22, 23 ; 50) réutilisable de l'insert (10), laquelle demeure à l'intérieur de la cafetière à portions, sert de dispositif ou d'auxiliaire de moussage.

10. Insert selon la revendication 9, **caractérisé en ce que**
le dispositif ou l'auxiliaire de moussage est réalisé entièrement ou partiellement sous la forme d'une feuille pouvant être perforée et/ou **en ce que** le dispositif ou l'auxiliaire de moussage est un filtre (60) hélicoïdal.

11. Insert selon l'une quelconque des revendications 8 à 10, **caractérisé en ce que**
la pièce réutilisable de l'insert (10), laquelle est reliée de manière détachable au contenant et demeure à l'intérieur de la cafetière à portions, sert de dispositif ou d'auxiliaire d'étanchéité.

12. Insert (10) selon l'une quelconque des revendications 8 à 11, **caractérisé en ce qu'**
une pièce réutilisable reliée de manière détachable au contenant et demeurant à l'intérieur de la cafetière à portions entre deux utilisations successives présente une ou plusieurs languettes (51) qu'il est possible de saisir pour retirer ladite pièce de la cafetière à portions après la dernière utilisation.

13. Insert (10) pour une cafetière à portions, dans lequel l'insert (10) comporte un contenant fermé ou pouvant être fermé destiné à loger une portion à infuser de café moulu, dans lequel au moins une partie de l'insert (10) est réutilisable,
**caractérisé en ce que**
le contenant présente une membrane filtrante (22) qui adhère à un support (20) présentant au moins une ouverture (26A) par l'intermédiaire d'un revêtement adhésif (21) et qui est reliée fixement à une matrice sur laquelle est appliquée une couche de colle (23) à partir de la face opposée à la membrane filtrante (22), dans lequel la membrane filtrante (22) peut être pressée contre la cafetière à portions par de l'eau sortant de l'ouverture (26A) du support (20) et peut ainsi être retirée du support (20) indéformable.

14. Insert selon la revendication 13, **caractérisé en ce que**
la pièce (22, 23 ; 50) réutilisable de l'insert (10), laquelle demeure à l'intérieur de la cafetière à portions, sert de dispositif ou d'auxiliaire de moussage et le dispositif ou l'auxiliaire de moussage est réalisé entièrement ou partiellement sous la forme d'une matrice (50) perforant une feuille.

15. Insert selon la revendication 14, **caractérisé en ce que**
la matrice (30 ; 50) perforant une feuille présente une ou plusieurs partie surélevées faisant saillie en direction de la feuille à perforer, par exemple des parties surélevées coniques ou pyramidales ou tronconiques.
